# EUROPÄISCHE PATENTANMELDUNG

(11) **EP 1 790 860 A2**
(43) Veröffentlichungstag der Anmeldung: **30.05.2007**
(21) Anmeldenummer: 06022372.4
(22) Anmeldetag: 26.10.2006
(51) Int. Cl.: F15B 15/28, F16F 9/32, B60W 10/02, B60W 10/18

(54) **Wegmesssystem für Kupplungsausrücksysteme**

(30) Priorität: 24.11.2005 DE 102005056025
(71) Anmelder: LuK Lamellen und Kupplungsbau Beteiligungs KG, 77813 Bühl (DE)
(72) Erfinder: Sester, Christof, 77723 Gengenbach (DE); Lang, Volker, 77886 Lauf (DE)

(57) **Zusammenfassung**

Die Erfindung betrifft ein Wegmesssystem insbesondere für Kupplungsausrücksysteme mit einem einer beweglichen Komponente eines Kolben-Zylinder-Aggregates zuordenbaren Magneten sowie Verfahren zur Herstellung dieser Komponente, mit einem Sensorsystem, welches an einer feststehenden Komponente des Kolben-Zylinder-Aggregats angeordnet ist und mit dem Magneten zur Erfassung der Stellung der beweglichen Komponente in Wirkverbindung steht.

Erfindungsgemäß ist in die bewegliche Komponente ein magnetisierbarer oder magnetisierter Bereich integriert.

## Beschreibung

Die Erfindung betrifft ein Wegmesssystem mit einem einer beweglichen Komponente eines Kolben-Zylinder-Aggregates zuordenbaren Magneten sowie Verfahren zur Herstellung dieser Komponente, mit einem Sensorsystem, welches an einer feststehenden Komponente des Kolben-Zylinder-Aggregats angeordnet ist und mit dem Magneten zur Erfassung der Stellung der beweglichen Komponente in Wirkverbindung steht.

Ein bevorzugtes Einsatzgebiet derartiger Einrichtungen sind Kupplungsausrücksysteme im Antriebsstrang von Kraftfahrzeugen. Diese Ausrücksysteme weisen beispielsweise einen Geberzylinder auf, der über ein Brems- oder Kupplungspedal, welches mit der Kolbenstange des Zylinders in Verbindung steht, aktiviert wird. Der im Geberzylinder erzeugte hydraulische Druck wird über ein mit Hydraulikflüssigkeit befülltes Leitungssystem an einen Nehmerzylinder übertragen, welcher dort eine Verschiebung eines Arbeitskolbens bewirkt und damit z.B. einen Kupplungsausrücker betätigen kann.

Um Schaltpunkte zu erfassen oder die Kolbenposition zu bestimmen, wird in bekannter Weise ein Magnet in Zusammenwirkung mit einem Sensor verwendet. Üblicherweise wird der Magnet dabei an dem Kolben befestigt, der die bewegliche Komponente des Geber- bzw. des Nehmerzylinders darstellt, während der Sensor am in Bezug zum Kolben feststehenden Zylindergehäuse angeordnet ist.

In DE 199 15 832 A1 ist beispielsweise ein ringförmiger Permanentmagnet in einer am Außenumfang des Kolbens befindlichen und zur Zylinderinnenwand offenen Ringnut angeordnet. Der Permanentmagnet ist mit dem Kolben entlang der Innenwandung des Zylinders axial verschiebbar. An der Außenwandung des Zylindergehäuses ist ein Aufnahmeteil befestigt, in dem zwei Hall-Schalter angeordnet sind, deren Axialabstand einer Anfangs- und einer Endposition des Kolbens entspricht und die auf das Magnetfeld des am Kolben befindlichen Permanentmagneten ansprechen und bei dessen Vorbeigleiten einen Schaltvorgang bzw. ein elektrisches Signal auslösen.

Bei dieser Art des Zusammenbaus von Kolben und Permanentmagnet besteht die Gefahr, dass bei plötzlichen, schockartigen Belastungen des Kolbens ein Lösen des Magneten aus der Ringnut und damit eine fehlerhafte Positionserkennung nicht ausgeschlossen werden kann.

Dieser Nachteil wird durch die in DE 203 08 810 U1 offenbarte Lösung beseitigt. Hier wird ein Kolben-Zylinder-Aggregat, insbesondere für ein hydraulisch betätigtes Kupplungs- oder Bremssystem mit einem Sensorsystem beschrieben, welches ebenfalls der Erkennung der Stellung des Kolbens in dem Zylinder dient. Dabei erfolgt aber die Anordnung des Permanentmagneten in der Weise, dass er mit einer Fläche an einer am Kolben ausgebildeten Anlagefläche anliegt und sich mit der anderen Stirnfläche an einem am Kolben separat angeordneten Sicherungselement abstützt. Damit ist bei dieser Ausführung zwar eine axiale Sicherung des Permanentmagneten an dem Kolben gegeben. Nachteilig ist, dass auf Grund der Anbringung des Magneten an der äußeren Kolbenfläche zusätzlicher Bauraum bereitgestellt werden muss. Es werden zusätzliche Teile mit entsprechend großem Montageaufwand eingesetzt.

Die Aufgabe der Erfindung besteht darin, ein Wegmesssystem mit einem einer beweglichen Komponente eines Kolben-Zylinder-Aggregates zuordenbaren Magneten sowie Verfahren zur Herstellung dieser Komponente zu schaffen, wobei bei geringem Montageaufwand und kleinem Bauraum keine zusätzlichen Teile für den Einbau benötigt werden.

Die Aufgabe wird durch die Merkmale der Patentansprüche 1 und 13 Merkmale gelöst. Vorteilhafte Weiterbildungen und Ausgestaltungen der Erfindung sind in den Unteransprüchen angegeben.

Das Wegmesssystem mit einem einer beweglichen Komponente eines Kolben-Zylinder-Aggregates zuordenbaren Magneten weist ein Sensorsystem auf, welches an einer feststehenden Komponente des Kolben-Zylinder-Aggregats angeordnet ist und mit dem Magneten zur Erfassung der Stellung der beweglichen Komponente in Wirkverbindung steht.

Erfindungsgemäß ist ein magnetisierbarer oder magnetisierter Bereich in die bewegliche Komponente integriert. Dieser magnetisierbare oder magnetisierte Bereich ist in die bewegliche Komponente mittels Spritzgießverfahren eingespritzt, auf diese aufgespritzt oder in dieser umspritzt.

Der eingespritzte oder aufgespritzte oder umspritzte Bereich kann dabei durch einen Magneten oder durch magnetisiertes Material gebildet und in beliebigen Formen ausgeführt sein.

Er kann dabei die Form eines Kreises oder eines Kreisringes oder eines Kreissegmentes oder eines Kreisabschnittes aufweisen. Der magnetisierbare oder magnetisierte Bereich ist an jeder beliebigen Stelle der beweglichen Komponente positionierbar.

In einer weiteren Ausführungsform ist der magnetisierbare oder magnetisierte Bereich durch die bewegliche Komponente selbst gebildet, die vollständig aus magnetisierbarem Material besteht. Das magnetisierbare Material der beweglichen Komponente wird dann in einem definierten Bereich magnetisiert.

Vorzugsweise ist das Kolben-Zylinder-Aggregat in einem Kupplungsbetätigungssystem angeordnet. Die bewegliche Komponente kann dabei ein Kolben oder eine Kolbenstange eines Geberzylinders oder eines Nehmerzylinders sein.

Verfahrensgemäß wird der magnetisierbare oder magnetisierte Bereich in die bewegliche Komponente integriert. Er wird dabei in diese eingespritzt oder auf diese aufgespritzt oder in dieser umspritzt, wobei er beliebige Formen annehmen kann. So kann er in der Form eines Kreises, eines Kreisringes eines Kreissegmentes oder eines Kreisabschnittes ausgeführt werden. Der magnetisierbare oder magnetisierte Bereich kann dabei durch einen Magneten oder durch magnetisierbares Material gebildet werden, welches in einem definierten Bereich magnetisiert wird. Der magnetisierbare oder magnetisierte Bereich kann an jeder beliebigen Stelle der beweglichen Komponente positioniert werden. Der magnetisierbare oder magnetisierte Bereich kann auch durch die vollständig aus magnetisierbarem Material bestehende bewegliche Komponente gebildet werden, welche in einem definierten Bereich magnetisiert wird.

Die Erfindung wird nachstehend an Ausführungsbeispielen näher erläutert.
Fig. 1: eine schematische Darstellung eines als Geberzylinder ausgebildeten Kolben-Zylinder-Aggregates mit in die Kolbenstange eingespritztem Magneten/magnetisierbaren Material
Fig. 2: in den Kolben eingespritzter Magnet/magnetisierbares Material

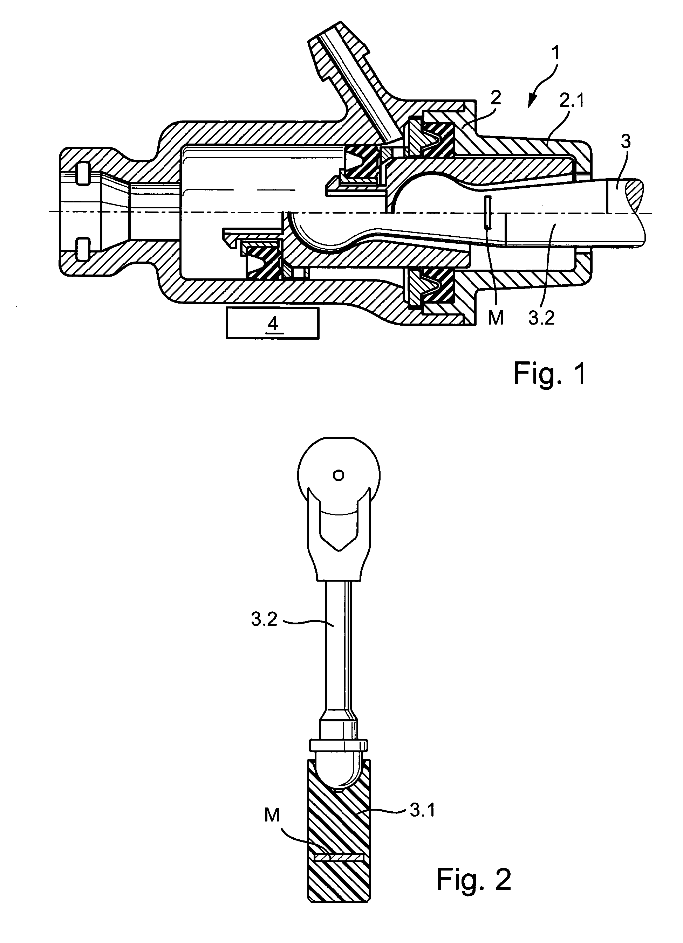

Fig. 1 zeigt zunächst zum allgemeinen Verständnis der Erfindung in schematischer Darstellung ein als Geberzylinder 1 ausgebildetes Kolben-Zylinder-Aggregat. Ein derartiger Geberzylinder 1 findet in einem hydraulischen Kupplungsbetätigungssystem eines Kraftfahrzeuges Anwendung.

Im Wesentlichen besteht der Geberzylinder 1 aus einer feststehenden Komponente 2, die durch ein Gehäuse 2.1 gebildet wird und einer beweglichen Komponente 3, die innerhalb des Gehäuses 2.1 in axialer Richtung gleitend angeordnet ist. Dabei kann die bewegliche Komponente 3 durch eine mit einem Kupplungspedal in Verbindung stehende Kolbenstange 3.2 oder von einem Kolben 3.1 gebildet werden, mit dem die Kolbenstange 3.2 schwenkbeweglich verbunden ist.

Es ist auch denkbar, dass die bewegliche Komponente 3 von einem Anbauteil, wie z. B. von einer als Verbindungselement von Kolben 3.1 und Kolbenstange 3.2 dienenden Kolbenklammer, gebildet wird.

Des Weiteren steht der Geberzylinder 1 über ein Hydrauliksystem mit einem hier nicht gezeigten Nehmerzylinder in Wirkverbindung, welcher seinerseits durch eine mit einem Kolben verbundene Kolbenstange einen Ausrückmechanismus einer Kupplung betätigen kann.

Auf die weitere Wirkungsweise dieses Kolben-Zylinder-Aggregates soll hier nicht näher eingegangen werden, da sie für das erfindungsgemäße Wegmesssystem nicht wesentlich ist.

Das Wegmesssystem weist in an sich bekannter Weise ein an dem Gehäuse 2.1 angeordnetes Sensorsystem 4 auf.

An Stelle des beim Stand der Technik an der Außenseite des Kolbens 3.1 befestigten Magneten ist gemäß der Erfindung ein magnetisierbarer oder magnetisierter Bereich M in die bewegliche Komponente 3 integriert. Dieser Bereich M wird entweder in die bewegliche Komponente 3 eingespritzt, oder er wird auf diese aufgespritzt oder in dieser umspritzt.

In Fig. 1 ist der Bereich M auf die Kolbenstange 3.2 aufgespritzt. In Fig. 2 befindet sich der Bereich M an dem Kolben 3.1 - er ist in die Mantelfläche des Kolbens 3.1 eingespritzt.

Das Einspritzen, Aufspritzen oder Umspritzen des magnetisierbaren oder magnetisierten Bereiches M kann durch ein an sich bekanntes Spritzgießverfahren geschehen.

Dieser eingespritzte, aufgespritzte oder umspritzte magnetisierbare oder magnetisierte Bereich M kann dabei beispielsweise als Kreis, Kreisring, Kreissegment, Kreisabschnitt ausgeführt sein. Er kann aber auch jede beliebige andere Form annehmen. Außerdem ist die Positionierung des magnetisierbaren oder magnetisierten Bereiches M an jeder Stelle der bewegten Komponente 3 denkbar.

Dabei kann der ein- oder aufgespritzte oder umspritzte magnetisierte Bereich M durch einen Magneten gebildet werden. Es ist aber auch möglich, magnetisierbares Material zu verwenden, das ebenso in die bewegliche Komponente eingespritzt, auf diese aufgespritzt oder in dieser umspritzt wird. Nachdem das magnetisierbare Material beispielsweise in oder auf die bewegliche Komponente 3 gespritzt wurde, wird es anschließend magnetisiert.

Noch eine andere Ausführung sieht vor, dass die gesamte bewegliche Komponente 3, wie Kolben 3.1 oder Kolbenstange 3.2, aus magnetisierbarem Material besteht. Das magnetisierbare Material wird dann in einem definierten Bereich entsprechend magnetisiert.

Die Arbeitsweise des Wegmesssystems geht wie bei den Lösungen des Standes der Technik vonstatten und soll deshalb hier nicht näher erläutert werden.

Die Vorteile dieses Wegmesssystems mit einem einer beweglichen Komponente eines Kolben-Zylinder-Aggregates zuordenbaren magnetisierbaren oder magnetisierten Bereiches bestehen insbesondere in der Einsparung an Bauteilen, Bauraum und Montageaufwand.

Es müssen bei der erfindungsgemäßen Lösung keine zusätzlichen Mittel (Magnet mit entsprechenden Befestigungs- oder Aufnahmeteilen) zum Einsatz kommen.

Ein weiterer Vorteil besteht darin, dass der magnetisierbare/magnetisierte Bereich an unterschiedlichsten Positionen der beweglichen Komponenten platziert werden kann.

Außerdem weist er bei den ersten beiden weiter oben beschriebenen Ausführungen des Ein-, Auf- oder Umspritzens eines Magneten oder eines magnetisierbaren/magnetisierten Bereiches eine vor äußeren Einflüssen geschützte Lage auf, was sich positiv auf die Genauigkeit der Messergebnisse sowie auf die Lebensdauer des Wegmesssystems auswirkt.

### Bezugszeichenliste

- 1: Geberzylinder
- 2: feststehende Komponente
- 2.1: Gehäuse
- 3: bewegliche Komponente
- 3.1: Kolben
- 3.2: Kolbenstange
- 4: Sensorsystem
- M: magnetisierbarer oder magnetisierter Bereich

## Patentansprüche

**1.** Wegmesssystem mit einem einer beweglichen Komponente eines Kolben-Zylinder-Aggregates zuordenbaren Magneten, mit einem Sensorsystem, welches an einer feststehenden Komponente (2) des Kolben-Zylinder-Aggregates angeordnet ist und mit dem Magneten zur Erfassung der Stellung der beweglichen Komponente (3) in Wirkverbindung steht,
**dadurch gekennzeichnet, dass** in die bewegliche Komponente (3) ein magnetisierbarer oder magnetisierter Bereich (M) integriert ist.

**2.** Wegmesssystem nach Anspruch 1, **dadurch gekennzeichnet, dass** der magnetisierbare oder magnetisierte Bereich (M) in die bewegliche Komponente (3) mittels Spritzgießverfahren eingespritzt oder auf diese aufgespritzt oder in dieser umspritzt ist.

**3.** Wegmesssystem nach Anspruch 1 oder 2, **dadurch gekennzeichnet, dass** der magnetisierbare oder magnetisierte Bereich (M) durch einen Magneten gebildet wird.

**4.** Wegmesssystem nach Anspruch 1 oder 2, **dadurch gekennzeichnet, dass** der magnetisierbare oder magnetisierte Bereich (M) durch magnetisierbares Material gebildet wird.

**5.** Wegmesssystem nach einem der Ansprüche 1 bis 4, **dadurch gekennzeichnet, dass** der eingespritzte oder aufgespritzte oder umspritzte magnetisierbare oder magnetisierte Bereich (M) in beliebigen Formen ausgeführt sein kann.

**6.** Wegmesssystem nach Anspruch 5, **dadurch gekennzeichnet, dass** der eingespritzte oder aufgespritzte oder umspritzte magnetisierbare oder magnetisierte Bereich (M) die Form eines Kreises oder eines Kreisringes oder eines Kreissegmentes oder eines Kreisabschnittes aufweist.

**7.** Wegmesssystem nach einem der Ansprüche 1 bis 6, **dadurch gekennzeichnet, dass** der eingespritzte oder aufgespritzte oder umspritzte magnetisierbare oder magnetisierte Bereich (M) an jeder beliebigen Stelle der beweglichen Komponente (3) positionierbar ist.

**8.** Wegmesssystem nach Anspruch 1, **dadurch gekennzeichnet, dass** die gesamte bewegliche Komponente (3) den magnetisierbaren oder magnetisierten Bereich (M) bildet.

**9.** Wegmesssystem nach Anspruch 8, **dadurch gekennzeichnet, dass** die aus magnetisierbarem Material bestehende bewegliche Komponente (3) in einem definierten Bereich magnetisiert ist.

**10.** Wegmesssystem nach einem der Ansprüche 1 bis 9, **dadurch gekennzeichnet, dass** das Kolben-Zylinder-Aggregat sich in einem Kupplungsbetätigungssystem befindet.

**11.** Wegmesssystem nach einem der Ansprüche 1 bis 10, **dadurch gekennzeichnet, dass** die bewegliche Komponente (3) ein Kolben (3.1) eines Geberzylinders (1) oder eines Nehmerzylinders ist.

**11.** Wegmesssystem nach einem der Ansprüche 1 bis 10, **dadurch gekennzeichnet, dass** die bewegliche Komponente (3) eine Kolbenstange (3.2) eines Geberzylinders (1) oder eines Nehmerzylinders ist.

**13.** Verfahren zur Herstellung einer beweglichen Komponente eines Kolben-Zylinder-Aggregates, welcher in einem Wegmesssystem ein Magnet zuordenbar ist, mit einem Sensorsystem, welches an einer feststehenden Komponente (2) des Kolben-Zylinder-Aggregats angeordnet ist und mit dem Magneten zur Erfassung der Stellung der beweglichen Komponente (3) in Wirkverbindung steht, **dadurch gekennzeichnet, dass** in die bewegliche Komponente (3) ein magnetisierbarer oder magnetisierter Bereich (M) integriert wird.

**14.** Verfahren zur Herstellung einer beweglichen Komponente nach Anspruch 13, **dadurch gekennzeichnet, dass** der magnetisierbare oder magnetisierte Bereich (M) in die bewegliche Komponente (3) mittels Spritzgießverfahren eingespritzt oder auf diese aufgespritzt oder in dieser umspritzt wird.

**15.** Verfahren zur Herstellung einer beweglichen Komponente nach Anspruch 14, **dadurch gekennzeichnet, dass** der magnetisierbare oder magnetisierte Bereich (M) von einem Magneten gebildet wird, der in die bewegliche Komponente (3) eingespritzt oder auf diese aufgespritzt oder in dieser umspritzt wird.

**16.** Verfahren zur Herstellung einer beweglichen Komponente nach Anspruch 14, **dadurch gekennzeichnet, dass** der magnetisierbare oder magnetisierte Bereich (M) von magnetisierbarem Material gebildet wird, das in die bewegliche Komponente (3) eingespritzt oder auf diese aufgespritzt oder in dieser umspritzt wird.

**17.** Verfahren zur Herstellung einer beweglichen Komponente nach einem der Ansprüche 14 bis16, **dadurch gekennzeichnet, dass** der eingespritzte oder aufgespritzte oder umspritzte magnetisierbare oder magnetisierte Bereich (M) in beliebigen Formen ausgeführt werden kann.

**18.** Verfahren zur Herstellung einer beweglichen Komponente nach Anspruch 17, **dadurch gekennzeichnet, dass** der eingespritzte oder aufgespritzte oder umspritzte magnetisierbare oder magnetisierte Bereich (M) in der Form eines Kreises oder eines Kreisringes oder eines Kreissegmentes oder eines Kreisabschnittes ausgeführt werden kann.

**19.** Verfahren zur Herstellung einer beweglichen Komponente nach einem der Ansprüche 13 bis 18, **dadurch gekennzeichnet, dass** der magnetisierbare oder magnetisierte Bereich (M) an jeder beliebigen Stelle der beweglichen Komponente (3) positioniert werden kann.

**20.** Verfahren zur Herstellung einer beweglichen Komponente nach Anspruch 13, **dadurch gekennzeichnet, dass** der magnetisierbare oder magnetisierte Bereich (M) von der gesamten beweglichen Komponente (3) gebildet wird.

**21.** Verfahren zur Herstellung einer beweglichen Komponente nach Anspruch 20, **dadurch gekennzeichnet, dass** die aus magnetisierbarem Material bestehende bewegliche Komponente (3) in einem definierten Bereich magnetisiert wird.
